# EUROPÄISCHE PATENTANMELDUNG

(11) **EP 4 538 651 A1**
(43) Veröffentlichungstag der Anmeldung: **16.04.2025**
(21) Anmeldenummer: 23203053.6
(22) Anmeldetag: 11.10.2023
(51) Int. Cl.: G01F 1/32, G01F 1/74

(54) **VERFAHREN ZUR DETEKTION VON FREMDENTITÄTEN IN EINER FLUIDSTRÖMUNG, WIRBELDURCHFLUSS-MESSSYSTEM UND WÄRMEPUMPEN-HEIZUNGSSYSTEM**

(71) Anmelder: SIKA Dr.Siebert & Kühn GmbH & Co. KG., 34260 Kaufungen (DE)
(72) Erfinder: Straub, Andreas, 07749 Jena (DE); Friedrichs, René, 37075 Göttingen (DE); Wilke, Bastian, 34212 Melsungen (DE)
(74) Vertreter: Walther Bayer Faber Patentanwälte PartGmbB

(57) **Zusammenfassung**

Gegenstand der Erfindung ist ein Verfahren zur Detektion von Fremdentitäten (E) in einer Fluidströmung (F), insbesondere Gasblasen oder partikelförmige Feststoffe, wobei das Verfahren mittels eines Wirbeldurchfluss-Messsystems (1) mit einem Wirbelsensor (11) durchgeführt wird, und wobei wenigstens die folgenden Verfahrensschritte durchgeführt werden:
- Fortlaufendes Erfassen eines Messsignals (S) mittels des Wirbelsensors (11),
- Ermitteln eines Istwerts wenigstens einer von dem Messsignal (S) abhängigen Messgröße, wobei die Messgröße sensitiv für in der Fluidströmung (F) mitgeführte Fremdentitäten (E) ist,
- Ermitteln einer Abweichung des Istwerts von einem Sollwert, wobei der Sollwert die Fluidströmung (F) ohne Fremdentitäten (E) charakterisiert, und
- Ermitteln und Ausgeben eines auf der Abweichung des Istwerts basierenden Indikatorsignals (I) als Maß für die Konzentration von in der Fluidströmung (F) mitgeführten Fremdentitäten (E).

## Beschreibung

Die Erfindung betrifft ein Verfahren zur Detektion von Fremdentitäten in einer Fluidströmung, insbesondere Gasblasen oder Fremdpartikel, mittels eines Wirbeldurchfluss-Messsystems, sowie ein entsprechend ausgebildetes Wirbeldurchfluss-Messsystem und ein damit ausgestattetes Wärmepumpen-Heizungssystem.

### STAND DER TECHNIK

Ein Aspekt bei der Überwachung von leitungsgeführten Fluidströmungen betrifft die Detektion von mitgeführten Fremdentitäten, beispielsweise von partikelförmigen Feststoffen oder Gasblasen in einer strömenden Flüssigkeit. Für die Prozesssteuerung ist die Kenntnis über das Auftreten und die Konzentration solcher Fremdentitäten wünschenswert, insbesondere sofern diese als Verunreinigungen klassifiziert sind, beispielsweise bei Prozessen mit hohen hygienischen Anforderungen wie in der Lebensmittel verarbeitenden Industrie. Ein weiteres Anwendungsbeispiel sind Leckagen in den Fluidkreisen von Wärmepumpen-Heizungssystemen, bei denen es zu einem potenziell explosionsverursachenden Eindringen von gasförmigem Kältemittel in den Heizungswasserkreis kommen kann.

Beispielsweise offenbart die Druckschrift WO 2006/088423 A1 ein Verfahren zur Detektion von Fremdkörpern in einem Medium, basierend auf einer Prüfung mittels Bestrahlung durch Mikrowellen und Ultraschall.

Weiterhin offenbart die Druckschrift DE 10 2021 128 381 A1 ein Verfahren zur Detektion von Fremdkörpern in einem strömungsfähigen Medium in einer Rohrleitung, wozu zweckmäßige Messungen der Permittivität des Mediums mittels darin angeordneter Elektroden oder Antennen vorgenommen werden.

### OFFENBARUNG DER ERFINDUNG

Die vorliegende Erfindung betrifft ein Verfahren zur Detektion von Fremdentitäten in einer Fluidströmung gemäß Anspruch 1, ein zur Verfahrensdurchführung ausgebildetes Wirbeldurchfluss-Messsystem gemäß Anspruch 9, sowie ein damit ausgestattetes Wärmepumpen-Heizungssystem gemäß Anspruch 10. Vorteilhafte Weiterbildungen der Erfindung sind in den abhängigen Ansprüchen angegeben.

Die Erfindung schließt die technische Lehre ein, dass das Verfahren zur Detektion von Fremdentitäten mittels eines Wirbeldurchfluss-Messsystems mit einem Wirbelsensor durchgeführt wird, wobei wenigstens die folgenden Verfahrensschritte durchgeführt werden:
- Fortlaufendes Erfassen eines Messsignals mittels des Wirbelsensors,
- Ermitteln eines Istwerts wenigstens einer von dem Messsignal abhängigen Messgröße, wobei die Messgröße sensitiv für in der Fluidströmung mitgeführte Fremdentitäten ist,
- Ermitteln einer Abweichung des Istwerts von einem Sollwert, wobei der Sollwert die Fluidströmung ohne Fremdentitäten charakterisiert, und
- Ermitteln und Ausgeben eines auf der Abweichung des Istwerts basierenden Indikatorsignals als Maß für die Konzentration von in der Fluidströmung mitgeführten Fremdentitäten.

Die Erfindung beruht auf der Erkenntnis, dass sich das Vorhandensein von Fremdentitäten in einer Fluidströmung auf charakteristischen Weise im Messsignal des Wirbelsensors eines Wirbeldurchfluss-Messsystems niederschlägt, und der Grundgedanke der Erfindung besteht darin, eine oder vorzugsweise mehrere zweckmäßige Messgrößen aus dem Messsignal zu extrahieren, deren Wert dediziert Auskunft über die Konzentration mitgeführter Fremdentitäten gibt. Bei den derart zu detektierenden Fremdentitäten handelt es sich insbesondere um Gasblasen in einer strömenden Flüssigkeit, um mitgeführte partikelförmige Feststoffe oder um eine in einer strömenden Flüssigkeit mitgeführte Fremdflüssigkeit anderer Dichte oder Viskosität.

Ein besonderer Vorteil des erfindungsgemäßen Verfahrens besteht darin, dass es apparativ mittels eines herkömmlichen Wirbeldurchfluss-Messsystems durchführbar ist. Wirbeldurchfluss-Messsysteme sind ohnehin feste Bestandteile von Systemen zur Überwachung von leitungsgeführten Fluidströmungen und dienen insbesondere zur fortlaufenden Bestimmung der Durchflussraten, sodass das erfindungsgemäße Verfahren anwendbar ist, ohne dass eine apparative Aufrüstung erfolgen muss.

Wirbeldurchfluss-Messsysteme basieren auf der Ermittlung der Wirbelablösefrequenz einer mittels eines Störkörpers in der zu überwachenden Fluidströmung induzierten Kärmänschen Wirbelstraße. Dazu wird ein Wirbelsensor stromabwärts des Störkörpers in der Fluidströmung angeordnet, wobei der Wirbelsensor zur Messung von lokalen Druckdifferenzen ausgebildet ist, die sich aus den gegenläufigen und versetzt zueinander vom Störkörper ablösenden Fluidwirbeln ergeben. Das Messsignal des Wirbelsensors weist somit einen oszillatorischen Anteil auf, aus dessen Periodendauer die Wirbelablösefrequenz bestimmbar ist. Bei Kenntnis der Strouhal-Zahl der Fluidströmung im Messabschnitt sowie der Geometrie des Messabschnitts samt Störkörper lässt sich aus der Wirbelablösefrequenz die Durchflussrate ermitteln.

Das erfindungsgemäße Detektieren von Fremdentitäten kann insbesondere zusätzlich zur Bestimmung der Durchflussrate (oder anderer Strömungsparameter) mittels des Wirbeldurchfluss-Messsystems durchgeführt werden. Im Vergleich zur Messung an einer reinen Fluidströmung wird das Messsignal des Wirbelsensors durch mitgeführte Fremdentitäten verändert, da diese die Ausbildung der Kármánschen Wirbelstraße beeinflussen. Insbesondere treten charakteristische Abweichungen im Frequenz- und Amplitudenspektrum auf, und die wenigstens eine auf Fremdentitäten sensitive Messgröße wird vorzugsweise aus einer Frequenzinformation und/oder einer Amplitudeninformation des Messsignals gebildet, beispielsweise als Mittelwerte oder Varianzen der Frequenzen oder Amplituden und/oder als Quotienten derartiger Größen. Dabei kann je nach konkretem Anwendungsfall, d.h., in Abhängigkeit des überwachten Fluids und der zu detektierenden Fremdentitäten, eine unterschiedliche Sensitivität der diversen Messgrößen für die Fremdentitäten vorliegen, sodass eine zweckmäßige Auswahl bzw. Priorisierung der betrachteten Messgrößen erfolgen kann.

Erfindungsgemäß wird der fortlaufend aus dem Messsignal des Wirbelsensors ermittelte Istwert der wenigstens einen betrachteten Messgröße mit einem Sollwert verglichen, der die Fluidströmung ohne Fremdentitäten charakterisiert. Der Istwert der Messgröße wird insbesondere anhand einer statistischen Auswertung des Messsignals über mehrere Perioden des oszillatorischen Signalanteils ermittelt. Aus der Abweichung von dem Sollwert wird ein Maß für die Konzentration von in der Fluidströmung mitgeführten Fremdentitäten gebildet und als ein Indikatorsignal ausgegeben. Das Indikatorsignal bildet insbesondere einen kontinuierlichen Ausgabewert, sodass eine zumindest relative Quantifizierung der Konzentration an Fremdentitäten möglich ist. Damit kann in einer konkreten Anwendung beispielsweise eine kritische Konzentration definiert werden, bei deren Überschreiten ein regulierender Eingriff in den überwachten Prozess ausgelöst werden soll. Das Indikatorsignal wird beispielsweise als ein wertkontinuierliches Spannungssignal zwischen 0 V und 3 V ausgegeben.

Vorteilhafterweise werden aus dem Messsignal des Wirbelsensors fortlaufend die Istwerte mehrerer Messgrößen extrahiert und mit zugehörigen Sollwerten verglichen, wodurch die Ermittlung der Konzentration an Fremdentitäten robuster durchführbar ist und präzisere Ergebnisse liefert.

Die Sollwerte der Messgrößen sowie die Zuordnung der Istwert-Abweichungen zur Konzentration von Fremdentitäten können insbesondere mittels Labormessungen vorab ermittelt werden.

In einer beispielhaften Ausführungsform des erfindungsgemäßen Verfahrens wird die wenigstens eine Messgröße als die Anzahl von überkritischen Abweichungen pro Zeiteinheit in einer Frequenz und/oder einer Amplitude des Messsignals von einem Mittelwert gebildet. Für das Vorliegen einer überkritischen Abweichung kann dabei beispielsweise auf ein aus der Varianz der Mittelwerte abgeleitetes Kriterium abgestellt werden.

Insbesondere kann die wenigstens eine Messgröße in Abhängigkeit von der Durchflussrate der Fluidströmung ausgewählt werden. Vorteilhafterweise wird die Messgröße bei geringen Durchflussraten aus einer Amplitudeninformation des Messsignals und bei hohen Durchflussraten aus einer Frequenzinformation gebildet. Alternativ können stets die Istwerte mehrerer Messgrößen ermittelt werden und ihre jeweilige Gewichtung für die Bestimmung der Konzentration an Fremdentitäten wird in Abhängigkeit von der Durchflussrate gewählt.

Vorteilhafterweise wird die Samplerate und/oder die Signalverstärkung beim Erfassen des Messsignals mittels des Wirbelsensors an die Durchflussrate der Fluidströmung angepasst. Beispielsweise ist bei hohen Durchflussraten und einer auf einer Frequenzinformation basierenden Messgröße insbesondere der Messbereich um die Nulldurchgänge des Messsignals von Interesse und sollte durch eine zweckmäßige Anpassung von Samplerate und/oder Signalverstärkung mit hinreichender Auflösung erfasst werden. Vorzugsweise liegt die Samplerate beim Erfassen des Messsignals im Bereich von 1 kHz bis 20 kHz, insbesondere im Bereich von 2 kHz bis 8 kHz.

In einer vorteilhaften Ausführungsform des erfindungsgemäßen Verfahrens wird die Validität des Indikatorsignals fortlaufend bewertet und ein zugehöriges Validitätssignal ausgegeben. Dem liegt die Erkenntnis zugrunde, dass Änderungen von Strömungsparametern, insbesondere Änderungen der Durchflussrate, zu einer transienten Beeinträchtigung in der Ermittlung der Konzentration an Fremdentitäten führen und das ausgegebene Indikatorsignal dementsprechend mit einer größeren Unsicherheit behaftet ist. Um diesem Umstand Rechnung zu tragen, wird die Validität des Indikatorsignals beispielsweise basierend auf dem Gradienten des jeweils instationären Strömungsparameters bewertet und ein zugehöriges Validitätssignal parallel zum Indikatorsignal ausgegeben. Das Validitätssignal verläuft beispielsweise wertkontinuierlich zwischen den Grenzwerten 0 und 1. Insbesondere wird die Validität des Indikatorsignals anhand der Durchflussrate der Fluidströmung bewertet, wobei Änderungen der Durchflussrate eine Verringerung der Validität bedingen. Zusätzlich oder alternativ können weitere Größen zur Bewertung der Validität betrachtet werden, beispielsweise die Streuung des Indikatorsignals.

Die Erfindung betrifft weiterhin ein Wirbeldurchfluss-Messsystem mit einem Wirbelsensor, einer Auswerteeinheit und einer Ausgabeeinheit, wobei das Wirbeldurchfluss-Messsystem zur Durchführung des erfindungsgemäßen Verfahrens zur Detektion von Fremdentitäten in einer Fluidströmung gemäß einer der vorgenannten Ausführungsformen ausgebildet ist, wobei die Auswerteeinheit zum Ermitteln des Indikatorsignals und die Ausgabeeinheit zum Ausgeben des Indikatorsignals eingerichtet sind. Als Wirbelsensor sind dabei prinzipiell alle im Stand der Technik gebräuchlichen Typen geeignet, insbesondere Piezosensoren, Membransensoren oder kapazitive Sensoren. Vorzugsweise umfasst die Auswerteeinheit eine Speichereinheit, worin die Werte des auszugebenden Indikatorsignals in parametrisierter Form abgespeichert sind, derart, dass die bei der Verfahrensdurchführung ermittelte Abweichung der wenigstens einen Messgröße von ihrem Sollwert einem Wert des Indikatorsignals zuordenbar ist. In vorteilhafter Ausführungsform ist die Auswerteeinheit zudem zum fortlaufenden Bewerten der Validität des Indikatorsignals und zur Bestimmung eines zugehörigen Validitätssignals eingerichtet. Die Ausgabeeinheit ist zur Ausgabe des Indikatorsignals sowie ggfs. auch des Validitätssignals insbesondere als wertkontinuierliche Spannungssignale eingerichtet.

Zudem betrifft die Erfindung ein Wärmepumpen-Heizungssystem umfassend einen Arbeitskreis mit einem Kältemittel, einen Heizkreis mit Heizungswasser, und einen Wärmetauscher, wobei der Arbeitskreis und der Heizkreis mittels des Wärmetauschers in thermischem Kontakt stehen, wobei der Heizkreis ein erfindungsgemäßes Wirbeldurchfluss-Messsystem aufweist, das zur Detektion des Kältemittels im Heizungswasser eingerichtet ist. Bei dem Kältemittel kann es sich beispielsweise um Propan handeln, das im Heizungswasser in Form von Gasblasen mitgeführt wird. Da bei Akkumulation von Propangas im Heizkreis eine Explosionsgefahr besteht, muss eine zugrundeliegende Leckage zwischen Arbeitskreis und Heizkreis möglichst frühzeitig entdeckt werden, wozu das erfindungsgemäße Verfahren im Betrieb des Wärmepumpen-Heizungssystems durchgeführt werden kann.

### AUSFÜHRUNGSBEISPIELE DER ERFINDUNG

Weitere, die Erfindung verbessernde Maßnahmen werden nachstehend gemeinsam mit der Beschreibung von Ausführungsbeispielen der Erfindung anhand der Figuren näher dargestellt. Es zeigt in schematischer Form:
Fig. 1: ein erfindungsgemäßes Wirbeldurchfluss-Messsystem,
Fig. 2: beispielhafte Signalverläufe, und
Fig. 3: ein erfindungsgemäßes Wärmepumpen-Heizungssystem.

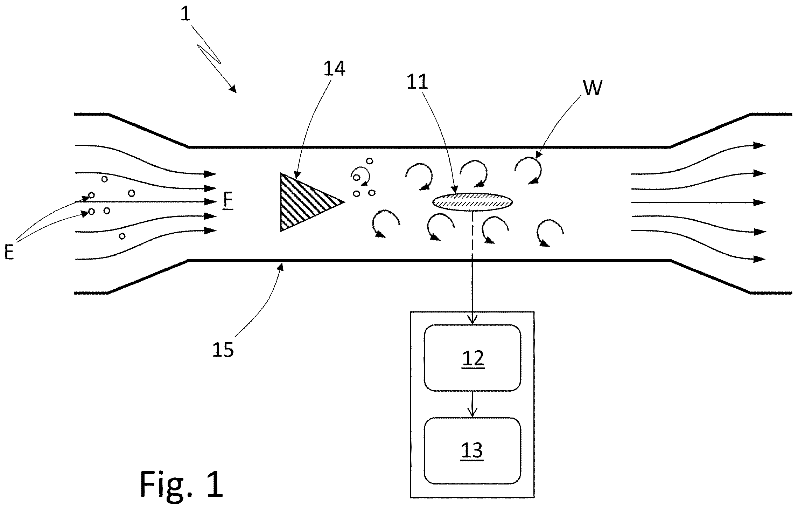

Fig. 1 zeigt eine schematische Querschnittsansicht eines erfindungsgemäßen Wirbeldurchfluss-Messsystems 1, ausgebildet zur Durchführung des erfindungsgemäßen Verfahrens zur Detektion von Fremdentitäten E in der Fluidströmung F. Das Wirbeldurchfluss-Messsystem 1 umfasst das Messrohr 15 mit dem darin angeordneten prismenförmigen Störkörper 14 und dem stromabwärts des Störkörper 14 angeordneten Wirbelsensor 11. Die Anwesenheit des Störkörpers 14 in der Fluidströmung F induziert die Bildung der dargestellten Kármánschen Wirbelstraße aus den gegenläufigen und versetzt zueinander abgelösten Wirbeln W, die am Wirbelsensor 11 als alternierende Druckschwankungen messbar sind.

Die in der Fluidströmung F mitgeführten Fremdentitäten E, die hier beispielhaft als Gasblasen ausgebildet sind, üben einen charakteristischen Einfluss auf die Ausbildung der Kármánschen Wirbelstraße aus, und das erfindungsgemäße Verfahren beruht auf der Identifikation und Auswertung dieses Einflusses im Messsignal des Wirbelsensors 11. Zu diesem Zweck dient die Auswerteeinheit 12, die das fortlaufend erfasste Messsignal des Wirbelsensors 11 empfängt und daraus das auszugebende Indikatorsignal ermittelt, d.h., den Istwert der wenigstens einen betrachteten Messgröße und dessen Abweichung vom zugehörigen Sollwert ermittelt, sowie das auf der ermittelten Abweichung basierende Indikatorsignals als Maß für die Konzentration der in der Fluidströmung F mitgeführten Fremdentitäten E ermittelt. Das Indikatorsignal sowie das vorzugsweise ebenfalls fortlaufend von der Auswerteeinheit 12 ermittelte Validitätssignal sind durch die Ausgabeeinheit 13 ausgebbar, insbesondere als wertkontinuierliche Spannungssignale.

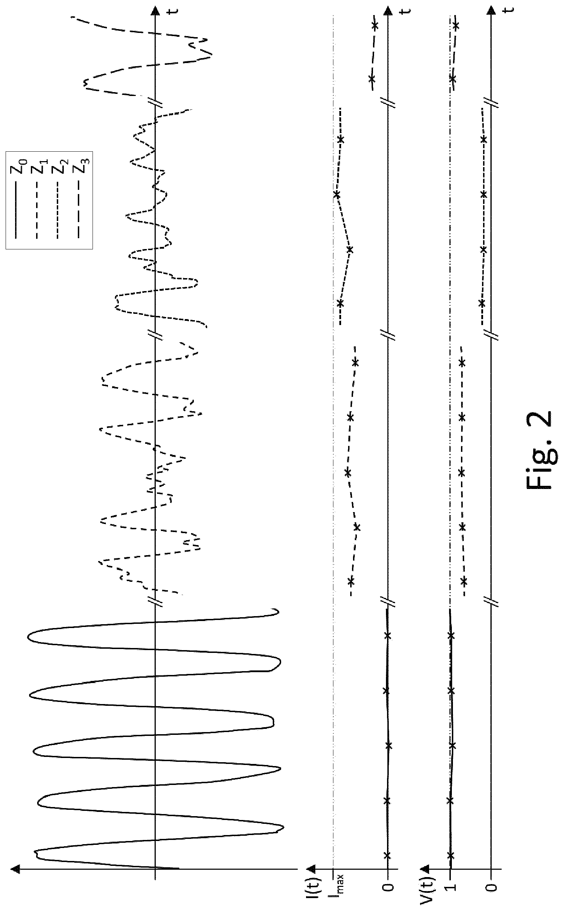

Fig. 2 zeigt beispielhafte Signalverläufe bei der Durchführung des erfindungsgemäßen Verfahrens, nämlich den Zeitverlauf des Messsignals S am Wirbelsensor sowie zugehörig des Indikatorsignals I und des Validitätssignals V. Die Signalverläufe umfassen vier unterschiedliche Strömungszustände Z₀ - Z₃, die sich hinsichtlich der jeweils vorliegenden Konzentration an Fremdentitäten und der Durchflussrate der überwachten Fluidströmung gemäß der Angaben in Tab. 1 unterscheiden.

**Tab. 1**

| **Strömungszustand** | **Konzentration an Fremdentitäten** | **Durchflussrate der Fluidströmung** |
|---|---|---|
| Z₀ | keine | konstant |
| Z₁ | hoch | konstant |
| Z₂ | hoch | zunehmend |
| Z3 | gering | konstant |

Das Messsignal S im Strömungszustand Z₀, d.h., bei einer Fluidströmung konstanter Durchflussrate und ohne mitgeführte Fremdentitäten, ist im Wesentlichen durch ein Sinussignal gebildet, wobei je Periodendauer zwei am Wirbelsensor vorbeiströmende Wirbel detektiert werden. In Anwesenheit von mitgeführten Fremdentitäten in den Strömungszuständen Z₁ - Z₃ wird das Messsignal S signifikant modifiziert und weist ein wesentlich strukturreicheres Frequenzspektrum auf.

Die zur Detektion der Fremdentitäten betrachteten Messgrößen werden insbesondere aus einer Frequenzinformation und/oder einer Amplitudeninformation des Messsignals S gebildet, und zum Ermitteln der jeweiligen Istwerte wird eine Auswertung des Messsignals S über mehrere Perioden der Grundfrequenz gleitend durchgeführt. Im vorliegenden Ausführungsbeispiel wird in Intervallen entsprechend der Periodendauer der Grundfrequenz des Messsignals S ein darauf basierender Wert des Indikatorsignals I ermittelt und ausgegeben. Das Indikatorsignal I wird als ein wertkontinuierliches Spannungssignal ausgegeben, und der maximale Signalpegel Iₘₐₓ beträgt beispielsweise 3 V. Im ungestörten Strömungszustand Z₀ nimmt das Indikatorsignal I einen Wert um 0 V an, und beim Vorliegen mitgeführter Fremdentitäten in den Strömungszuständen Z₁ - Z₃ steigt das Indikatorsignal I auf ein der jeweiligen Konzentration an Fremdentitäten entsprechendes Niveau.

Zudem wird die Validität des Indikatorsignals I fortlaufend bewertet und das zugehörige Validitätssignal V ausgegeben. Die Validität wird im vorliegenden Ausführungsbeispiel zum einen anhand der Durchflussrate der Fluidströmung bewertet, wobei Änderungen der Durchflussrate eine Verringerung der Validität bedingen. Zusätzlich wird die Streuung der Werte des Indikatorsignals I in zweckmäßigen Intervallen betrachtet. Dieses Vorgehen beruht auf der Erkenntnis, dass bei hohen Konzentrationen an mitgeführten Fremdentitäten die erfindungsgemäße Ermittlung des Indikatorsignals I mit erhöhter Unsicherheit behaftet ist. Dementsprechend sind die Validität und die Streuung des Indikatorsignals I miteinander negativ korreliert.

Das Validitätssignal V wird hier beispielhaft als ein wertkontinuierliches Signal zwischen den Extremwerten "1" (gänzlich valide) und "0" (unbrauchbar) ausgegeben. Bei konstanten Durchflussraten der überwachten Fluidströmung (Strömungszustände Z₀, Z₁ und Z₃) liegt generell ein hohes Validitätsniveau vor, welches lediglich im Fall des durch eine hohe Konzentration an Fremdentitäten charakterisierten Strömungszustands Z₁ aufgrund der erhöhten Streuung im Indikatorsignal I deutlich reduziert ist. Durch eine Änderung der Durchflussrate (Strömungszustand Z₂) wird die erfindungsgemäße Ermittlung des Indikatorsignals I wesentlich beeinträchtigt, und das zugehörige Validitätssignal V sinkt dementsprechend stark ab.

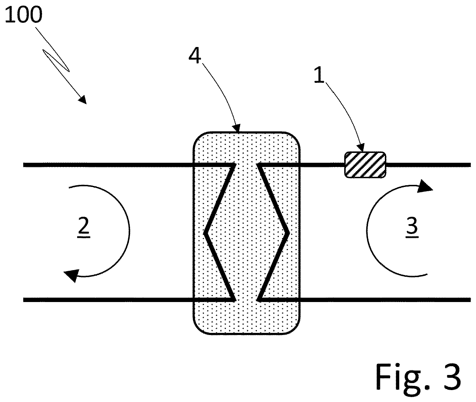

Fig. 3 zeigt eine schematische Darstellung eines erfindungsgemäßen Wärmepumpen-Heizungssystem 100, umfassend den Arbeitskreis 2 mit einem Kältemittel, den Heizkreis 3 mit Heizungswasser, und den Wärmetauscher 4, wobei der Arbeitskreis 2 und der Heizkreis 3 mittels des Wärmetauschers 4 in thermischem Kontakt stehen. Der Heizkreis 3 weist das erfindungsgemäße Wirbeldurchfluss-Messsystem 1 auf, das zur Detektion des Kältemittels im Heizungswasser eingerichtet ist.

Der Arbeitskreis 2 ist beispielsweise Bestandteil einer Kompressionswärmepumpe, und das im Betrieb darin zirkulierende Kältemittel wechselt unter Antrieb eines Kompressors periodisch den Aggregatzustand zwischen flüssig und gasförmig. Die beim Verdampfen des Kältemittels aufgenommene Wärme wird bei der anschließenden Kondensation im Wärmetauscher auf das Heizungswasser im Heizkreis 3 übertragen, und steht somit insbesondere für die Heizung eines Gebäudes zur Verfügung. Sofern aufgrund einer Leckage Kältemittel in den Heizkreis 3 eindringt, erfolgt eine Detektion des Kältemittels als Fremdentität mittels des erfindungsgemäß ausgebildeten Wirbeldurchfluss-Messsystems 1.

### Bezugszeichenliste:

- 1: Wirbeldurchfluss-Messsystem
- 11: Wirbelsensor
- 12: Auswerteeinheit
- 13: Ausgabeeinheit
- 14: Störkörper
- 15: Messrohr
- 2: Arbeitskreis
- 3: Heizkreis
- 4: Wärmetauscher
- 100: Wärmepumpen-Heizungssystem

- E: Fremdentität
- F: Fluidströmung
- S: Messsignal
- I: Indikatorsignal
- Iₘₐₓ: maximaler Signalpegel
- V: Validitätssignal
- W: Wirbel
- Z: Strömungszustand
- t: Zeit

## Patentansprüche

1. Verfahren zur Detektion von Fremdentitäten (E) in einer Fluidströmung (F), insbesondere Gasblasen oder partikelförmige Feststoffe,
**dadurch gekennzeichnet,**
**dass** das Verfahren mittels eines Wirbeldurchfluss-Messsystems (1) mit einem Wirbelsensor (11) durchgeführt wird, wobei wenigstens die folgenden Verfahrensschritte durchgeführt werden:
- Fortlaufendes Erfassen eines Messsignals (S) mittels des Wirbelsensors (11),
- Ermitteln eines Istwerts wenigstens einer von dem Messsignal (S) abhängigen Messgröße, wobei die Messgröße sensitiv für in der Fluidströmung (F) mitgeführte Fremdentitäten (E) ist,
- Ermitteln einer Abweichung des Istwerts von einem Sollwert, wobei der Sollwert die Fluidströmung (F) ohne Fremdentitäten (E) charakterisiert, und
- Ermitteln und Ausgeben eines auf der Abweichung des Istwerts basierenden Indikatorsignals (I) als Maß für die Konzentration von in der Fluidströmung (F) mitgeführten Fremdentitäten (E).

2. Verfahren nach Anspruch 1,
**dadurch gekennzeichnet,**
**dass** die wenigstens eine Messgröße aus einer Frequenzinformation und/oder einer Amplitudeninformation des Messsignals (S) gebildet wird.

3. Verfahren nach Anspruch 1 oder 2,
**dadurch gekennzeichnet,**
**dass** die wenigstens eine Messgröße als die Anzahl von überkritischen Abweichungen pro Zeiteinheit in einer Frequenz und/oder einer Amplitude des Messsignals (S) von einem Mittelwert gebildet wird.

4. Verfahren nach einem der vorgenannten Ansprüche,
**dadurch gekennzeichnet,**
**dass** die wenigstens eine Messgröße in Abhängigkeit von der Durchflussrate der Fluidströmung (F) ausgewählt wird.

5. Verfahren nach einem der vorgenannten Ansprüche,
**dadurch gekennzeichnet,**
**dass** die Samplerate und/oder die Signalverstärkung beim Erfassen des Messsignals (S) an die Durchflussrate der Fluidströmung (F) angepasst wird.

6. Verfahren nach einem der vorgenannten Ansprüche,
**dadurch gekennzeichnet,**
**dass** die Samplerate beim Erfassen des Messsignals (S) im Bereich von 1 kHz bis 20 kHz, insbesondere im Bereich von 2 kHz bis 8 kHz liegt.

7. Verfahren nach einem der vorgenannten Ansprüche,
**dadurch gekennzeichnet,**
**dass** die Validität des Indikatorsignals (I) fortlaufend bewertet und ein zugehöriges Validitätssignal (V) ausgegeben wird.

8. Verfahren nach Anspruch 7,
**dadurch gekennzeichnet,**
**dass** die Validität des Indikatorsignals (I) anhand der Durchflussrate der Fluidströmung (F) bewertet wird, wobei Änderungen der Durchflussrate eine Verringerung der Validität bedingen.

9. Wirbeldurchfluss-Messsystem (1) mit einem Wirbelsensor (11), einer Auswerteeinheit (12) und einer Ausgabeeinheit (13),
**dadurch gekennzeichnet,**
**dass** das Wirbeldurchfluss-Messsystem (1) zur Durchführung des Verfahrens zur Detektion von Fremdentitäten (E) in einer Fluidströmung (F) gemäß einem der vorgenannten Ansprüche ausgebildet ist, wobei die Auswerteeinheit (12) zum Ermitteln des Indikatorsignals (I) und die Ausgabeeinheit (13) zum Ausgeben des Indikatorsignals (I) eingerichtet sind.

10. Wärmepumpen-Heizungssystem (100) umfassend einen Arbeitskreis (2) mit einem Kältemittel, einen Heizkreis (3) mit Heizungswasser, und einen Wärmetauscher (4), wobei der Arbeitskreis (2) und der Heizkreis (3) mittels des Wärmetauschers (4) in thermischem Kontakt stehen,
**dadurch gekennzeichnet,**
**dass** der Heizkreis (3) ein Wirbeldurchfluss-Messsystem (1) gemäß Anspruch 9 aufweist, das zur Detektion des Kältemittels im Heizungswasser eingerichtet ist.

## Geänderte Patentansprüche

### Geänderte Patentansprüche gemäss Regel 137(2) EPÜ.

1. Verfahren zur Detektion von Fremdentitäten (E) in einer Fluidströmung (F), insbesondere Gasblasen oder partikelförmige Feststoffe, wobei das Verfahren mittels eines Wirbeldurchfluss-Messsystems (1) mit einem Wirbelsensor (11) durchgeführt wird, wobei wenigstens die folgenden Verfahrensschritte durchgeführt werden:
- Fortlaufendes Erfassen eines Messsignals (S) mittels des Wirbelsensors (11),
- Ermitteln eines Istwerts wenigstens einer von dem Messsignal (S) abhängigen Messgröße, wobei die Messgröße sensitiv für in der Fluidströmung (F) mitgeführte Fremdentitäten (E) ist,
- Ermitteln einer Abweichung des Istwerts von einem Sollwert, wobei der Sollwert die Fluidströmung (F) ohne Fremdentitäten (E) charakterisiert, und
- Ermitteln und Ausgeben eines auf der Abweichung des Istwerts basierenden Indikatorsignals (I) als Maß für die Konzentration von in der Fluidströmung (F) mitgeführten Fremdentitäten (E),
**dadurch gekennzeichnet,**
**dass** die Validität des Indikatorsignals (I) anhand der Durchflussrate der Fluidströmung (F) fortlaufend bewertet und ein zugehöriges Validitätssignal (V) ausgegeben wird, wobei Änderungen der Durchflussrate eine Verringerung der Validität bedingen.

2. Verfahren nach Anspruch 1,
**dadurch gekennzeichnet,**
**dass** die wenigstens eine Messgröße aus einer Frequenzinformation und/oder einer Amplitudeninformation des Messsignals (S) gebildet wird.

3. Verfahren nach Anspruch 1 oder 2,
**dadurch gekennzeichnet,**
**dass** die wenigstens eine Messgröße als die Anzahl von überkritischen Abweichungen pro Zeiteinheit in einer Frequenz und/oder einer Amplitude des Messsignals (S) von einem Mittelwert gebildet wird.

4. Verfahren nach einem der vorgenannten Ansprüche,
**dadurch gekennzeichnet,**
**dass** die wenigstens eine Messgröße in Abhängigkeit von der Durchflussrate der Fluidströmung (F) ausgewählt wird.

5. Verfahren nach einem der vorgenannten Ansprüche,
**dadurch gekennzeichnet,**
**dass** die Samplerate und/oder die Signalverstärkung beim Erfassen des Messsignals (S) an die Durchflussrate der Fluidströmung (F) angepasst wird.

6. Verfahren nach einem der vorgenannten Ansprüche,
**dadurch gekennzeichnet,**
**dass** die Samplerate beim Erfassen des Messsignals (S) im Bereich von 1 kHz bis 20 kHz, insbesondere im Bereich von 2 kHz bis 8 kHz liegt.

7. Wirbeldurchfluss-Messsystem (1) mit einem Wirbelsensor (11), einer Auswerteeinheit (12) und einer Ausgabeeinheit (13),
**dadurch gekennzeichnet,**
**dass** das Wirbeldurchfluss-Messsystem (1) zur Durchführung des Verfahrens zur Detektion von Fremdentitäten (E) in einer Fluidströmung (F) gemäß einem der vorgenannten Ansprüche ausgebildet ist, wobei die Auswerteeinheit (12) zum Ermitteln des Indikatorsignals (I) und die Ausgabeeinheit (13) zum Ausgeben des Indikatorsignals (I) eingerichtet sind.

8. Wärmepumpen-Heizungssystem (100) umfassend einen Arbeitskreis (2) mit einem Kältemittel, einen Heizkreis (3) mit Heizungswasser, und einen Wärmetauscher (4), wobei der Arbeitskreis (2) und der Heizkreis (3) mittels des Wärmetauschers (4) in thermischem Kontakt stehen,
**dadurch gekennzeichnet,**
**dass** der Heizkreis (3) ein Wirbeldurchfluss-Messsystem (1) gemäß Anspruch 7 aufweist, das zur Detektion des Kältemittels im Heizungswasser eingerichtet ist.
